# EUROPEAN PATENT SPECIFICATION

(11) **EP 0 480 453 B1**
(45) Date of publication and mention of the grant of the patent: **16.04.1997**
(21) Application number: 91117372.2
(22) Date of filing: 11.10.1991
(51) Int. Cl.: G02B 6/28, C03B 37/15, C03B 23/043

(54) **Methods of and apparatus for producing an optical fiber coupler**
Verfahren und Einrichtungen zur Herstellung eines faseroptischen Kopplers
Procédés et appareils pour fabriquer un coupleur à fibre optique

(30) Priority: 12.10.1990 JP 274825/90; 26.11.1990 JP 323516/90; 26.11.1990 JP 323517/90
(43) Date of publication of application: 15.04.1992
(73) Proprietor: SUMITOMO ELECTRIC INDUSTRIES, LIMITED, Osaka 541 (JP); SUMIDEN OPCOM, LTD., Ota-ku, Tokyo (JP)
(72) Inventor: Suganuma, Hiroshi, c/o Yokohama Works of Sumitomo, Sakae-ku, Yokohama-shi, Kanagawa (JP); Takimoto, Hiroaki, c/o Yokohama Works of Sumitomo, Sakae-ku, Yokohama-shi, Kanagawa (JP); Yokota, Hiroshi, c/o Yokohama Works of Sumitomo, Sakae-ku, Yokohama-shi, Kanagawa (JP); Fukuma, Masumi, c/o Yokohama Works of Sumitomo, Sakae-ku, Yokohama-shi, Kanagawa (JP); Arimoto, Kazuhiko, c/o Sumiden Opcom Ltd., Ota-ku, Tokyo (JP)
(74) Representative: Füchsle, Klaus, Dipl.-Ing.

(56) References cited:
- EP-A- 0 370 465
- WO-A-89/10901
- DE-A- 3 400 710
- FR-A- 1 279 463
- PATENT ABSTRACTS OF JAPAN vol. 14, no. 341 (P-1081) 24 July 1990; & JP-A-2 118 606

## Description

### BACKGROUND OF THE INVENTION

The present invention generally relates to optical fiber couplers used in optical communication, measurement, etc. and more particularly, to a method of producing an optical fiber coupler, in which glass portions of a plurality of optical fibers are fusion bonded to each other and stretched.

When an optical communication system or an optical data link network is constructed, an optical directional coupler for distributing, at a desired ratio, an optical signal delivered from a light source is a vital constituent element. One example of the optical directional coupler is an optical fiber coupler. Usually, the optical fiber coupler is produced as follows. Namely, a plurality of optical fibers are stranded or arranged in parallel and then, glass portions of the optical fibers are heated by using a heat source such as an acetylene gas burner so as to be fusion bonded to each other integrally. Subsequently, the integral glass portions are further heated and stretched under a constant tension so as to be tapered.

In a known method disclosed in, for example, Japanese Patent Laid-Open Publication No. 64-21405, when glass portions of a plurality of optical fibers, which are secured by a pair of clampers, are heated by a gas burner acting as a heat source so as to be fusion bonded to each other and stretched, a gas burner having a single gas nozzle is reciprocated in parallel with an axial direction of the optical fibers. This is because in order to obtain an optical fiber coupler having excellent characteristics, it is desirable that the glass portions of the optical fibers are uniformly heated over a length of about 5 mm so as to be fusion bonded to each other and stretched. However, the known method has the following drawbacks (1) and (2).
(1) Since reciprocation of the gas burner is stopped at one end of the glass portions and then, is started towards the other end of the glass portions, heating period of the opposite ends of the glass portions becomes longer relatively and thus, heating temperature of the opposite ends of the glass portions is likely to become higher than that of the remaining part of the glass portions. Therefore, in the fusion bonding process, joining degree of the glass portions of the optical fibers rises only at the opposite ends of the glass portions. Meanwhile, in the stretching process, only the opposite ends of the glass portions are stretched sufficiently. Thus, the stretched glass portions have an uneven shape in the axial direction of the optical fibers. As a result, an optical fiber coupler having excellent characteristics cannot be produced at high reproducibility.
(2) In the stretching process, the glass portions are normally heated under a constant tension while being stretched. However, if a phenomenon takes place during the stretching process such that the tension varies or the heating temperature varies due to wavering of a flame, etc., the stretching speed will change only at that location of the glass portions, which is being heated by the gas burner at the time of occurence of the variation, relative to the remaining locations of the glass portions. Therefore, the stretched glass portions are likely to have an uneven shape in the axial direction of the optical fibers. As a result, an optical fiber coupler having excellent characteristics cannot be produced at high reproducibility.

A prior art that is of interest is EP-A-0 370 465 that discloses a method for manufacturing a fiber type coupler by fusing and elongating a plurality of optical fibers in which a multi-wire optical fiber wire is used as said plurality of optical fibers. The method involves as a first step removing the coating from said plurality of optical fibers where a coupler is to be established and bringing the exposed wires into mutual contact. As a second step the exposed wires are brought into mutual contact, fused together and stretched. The heating means in this second step may be an acetylene burner. In a particular embodiment there is a third step in which the fused together and stretched wires are further heated by a plurality of gas nozzles disposed along the length thereof, the acetylene burner being first removed, and this further heating plus tension is continued until a desired split ratio in the process is reached. In said particular embodiment three side-by-side gas burners are used in said third step, the central one being illustrated as being closer to the exposed wires than are the gas burners on each side of said central gas burner.

### SUMMARY OF THE INVENTION

The invention comprises a first method of producing an optical fiber coupler as defined in the accompanying Claims 1 to 5.

The invention also comprises a second method of producing an optical fiber coupler as defined in the accompanying Claims 6 to 10.

The invention further comprises a third method of producing an optical fiber coupler as defined in the accompanying Claims 11 to 15.

The invention comprises also a first apparatus as defined in the accompanying Claims 16 to 20 for carrying out the method defined in any one of Claims 1 to 5.

The invention comprises also a second apparatus as defined in the accompanying Claims 21 to 25 for carrying out the method defined in any one of Claims 6 to 10.

The invention further comprises a third apparatus as defined in the accompanying Claims 26 to 30 for carrying out the method defined in anyone of Claims 11 to 15.

Independent Claims 1, 6, 11, 16, 21 and 26 have all been divided into a two-part form based on the assumption that the aforesaid EP-A-0 370 465 is the nearest state of the art.

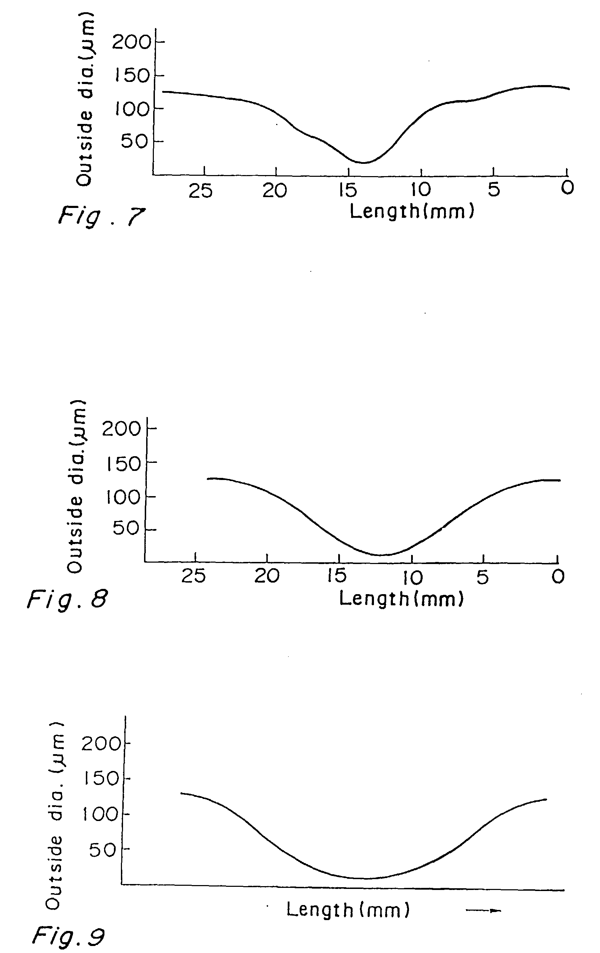

It is an essential object of the present invention to provide methods and apparatus for producing an optical fiber coupler in which denuded portions of a plurality of glass optical fibers are arranged in parallel with each other, in which said denuded portions are heated so as to be fusion bonded to each other integrally, and in which the fusion bonded denuded portions are further heated and stretched such that the taper (Fig. 9) of the stretched fusion bonded denuded portions is smoother than the taper (Fig. 7) that is obtained by the use of a single gas burner reciprocated in parallel with the axial direction of the fusion bonded denuded portions; and is gentler than the taper (Fig. 8) that is obtained by the use of a fixedly positioned elongate gas burner having a single surface extending in a longitudinal direction parallel to that of said fusion bonded denuded portions, said single surface having a plurality of gas nozzles spaced apart along its length; or one or more slit like gas nozzles extending in a direction along its length.

Propane, mixture of oxygen and acetylene, mixture of oxygen and hydrogen, oxygen, etc. can be used as combustion gas supplied to the gas burner.

### BRIEF DESCRIPTION OF THE DRAWINGS

The object and features of the present invention will become apparent from the following description taken in conjunction with the preferred embodiments thereof with reference to the accompanying drawings, in which:
Fig. 1 is a perspective view of a gas burner employed in a production method according to a first embodiment of the present invention;
Figs. 2a to 2c are perspective views of gas burners which are first to third modifications of the gas burner of Fig. 1, respectively;
Fig. 3 is a perspective view of a gas burner employed in a production method according to a second embodiment of the present invention;
Figs. 4a to 4c are perspective views of gas burners which are first to third modifications of the gas burner of Fig. 3, respectively;
Fig. 5 is a view similar to Fig. 3, particularly showing a third embodiment of the present invention;
Figs. 6a to 6c are perspective views of gas burners which are first to third modifications of the gas burner of Fig. 5, respectively;
Fig. 7 is a graph showing the taper of stretched integral glass portions of optical fibers, which is obtained by using the aforesaid single gas burner reciprocating parallel with the fusion bonded denuded portions;
Fig. 8 is a graph showing the taper of stretched integral glass portions of optical fibers, which is obtained by using the aforesaid fixedly positioned elongate gas burner having a single surface extending in a direction parallel to that of said fusion bonded denuded portions; and
Fig. 9 is a graph showing the taper of stretched integral glass portions of optical fibers, which is obtained by using the method and apparatus of the present invention.

### DETAILED DESCRIPTION OF THE INVENTION

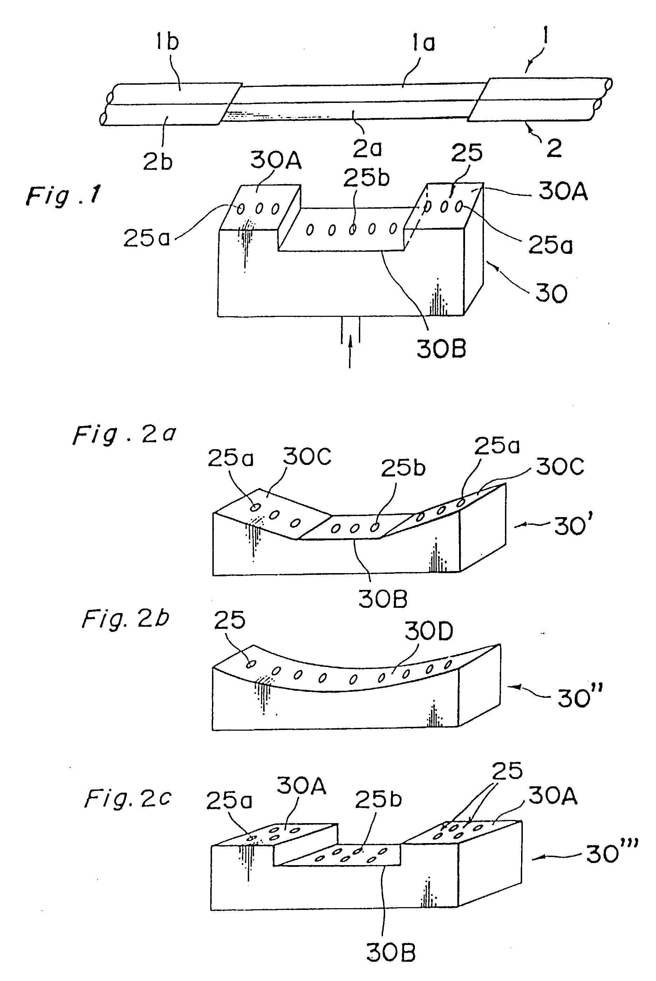

Referring now to the drawings, there is shown in Fig. 1 a substantially U-shaped gas burner 30 employed in a production method according to a first embodiment of the present invention. The gas burner 30 has a plurality of gas nozzles 25 arranged in a line extending in parallel with the axial direction of the optical fibers 1 and 2. A pair of flat upper faces 30A are formed at opposite end portions of the gas burner 30, while a recessed flat upper face 30B is formed at a central portion of the gas burner 30 so as to be interposed between the flat upper faces 30A. The recessed flat upper face 30B is disposed downwardly from the flat upper faces 30A relative to the glass portions la and 2a. The gas nozzles 25 includes gas nozzles 25a and 25b which are, respectively, provided on the flat upper faces 30A and the recessed flat upper face 30B. Therefore, the gas nozzles 25b on the recessed flat upper face 30B are spaced farther away from the glass portions la and 2a than the gas nozzles 25a on the flat upper faces 30A are. Since the gas burner 30 has a plurality of the gas nozzles 25, the gas burner 30 is fixed in position during heating of the glass portions 1a and 2a.

Figs. 2a, 2b and 2c show gas burners 30', 30" and 30"' which are first, second and third modifications of the gas burner 30, respectively. In the gas burner 30' of Fig. 2a, a pair of the flat upper faces 30A of the burner 30 are replaced by a pair of oblique upper faces 30C inclined downwardly towards the recessed flat upper face 30B. The gas burner 30" of Fig. 2b has a concavely arcuate upper face 30D. In the gas burner 30"' of Fig. 2c, a plurality of, for example, two rows of the gas nozzles 25 are formed on the flat upper faces 30A and the recessed flat upper face 30B.

In a concrete example, optical fiber couplers are produced by using the gas burner 30. The gas burner 30 has an overall length of 18 mm, each of the gas nozzles 25 has a diameter of 0.3 mm and the gas nozzles 25 are provided at an interval of 1.5 mm. Since the number of the gas nozzles 25a on the opposite flat upper faces 30A is 6 and the number of the gas nozzles 25b on the central recessed flat upper face 30B is 5, a total of 11 gas nozzles 25 are provided. Evaluation of characteristics of the optical fiber couplers has shown that each of the optical fiber couplers has such excellent characteristics as a coupling ratio of 50 ± 1 % and an excess ratio of 0.10 dB or less.

Meanwhile, by measuring shape of the stretched integral glass portions of each of the optical fiber couplers, a smooth taper free from uneven portions as shown in Fig. 9 is obtained at remarkably high reproducibility. Since the gas burner 30 is substantially U-shaped, temperature distribution of the gas burner 30 is more uniform. Therefore, the taper (Fig. 9) of the stretched integral glass portions obtained by the gas burner 30 is gentler than that (Fig. 8) obtained when the gas burners are all at the same distance from the optical fibers. As a result, optical loss of the optical fiber couplers obtained by the gas burner 30 becomes less than that obtained by gas burners that are all at the same distance from the optical fibers.

As will be seen from the foregoing description, in the production method according to the first embodiment of the present invention, the glass portions of the two optical fibers are integrally fusion bonded to each other uniformly and the stretched integral glass portions of the optical fibers have excellent shape at remarkably high reproducibility. Therefore, in accordance with the first embodiment of the present invention, the optical fiber couplers having excellent characteristics can be produced stably.

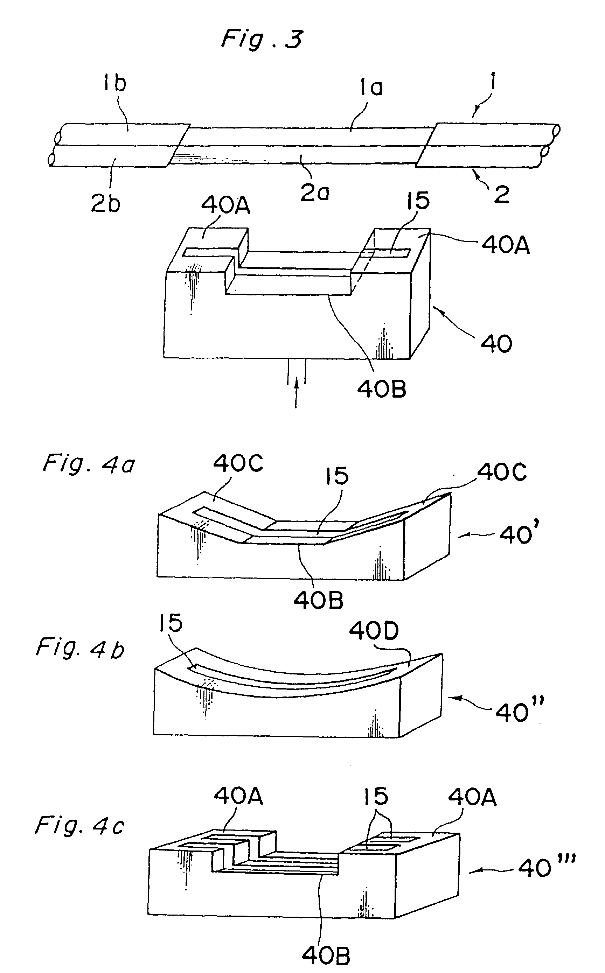

Furthermore, Fig. 3 shows a substantially U-shaped gas burner 40 employed in a production method according to a second embodiment of the present invention, while Figs. 4a to 4c show gas burners 40', 40" and 40"' which are first to third modifications of the gas burner 40, respectively. The gas burners 40 and 40' to 40"' are similar to the gas burners 30 (Fig. 1) and 30' to 30"' (Figs. 2a to 2c), respectively and have burner bodies identical with those of the gas burners 30 and 30' to 30"', respectively. In the gas nozzles 40 and 40' to 40"', the gas nozzles 25 of Fig. 1 are replaced by the slitlike gas nozzle 15. Since other constructions of the gas burners 40 and 40' to 40"' are similar to those of the gas nozzles 30 and 30' to 30"', respectively, description thereof is abbreviated for the sake of brevity.

In accordance with the second embodiment of the present invention, the optical fiber couplers having excellent characteristics can be produced stably in the same manner as in the first embodiment of the present invention.

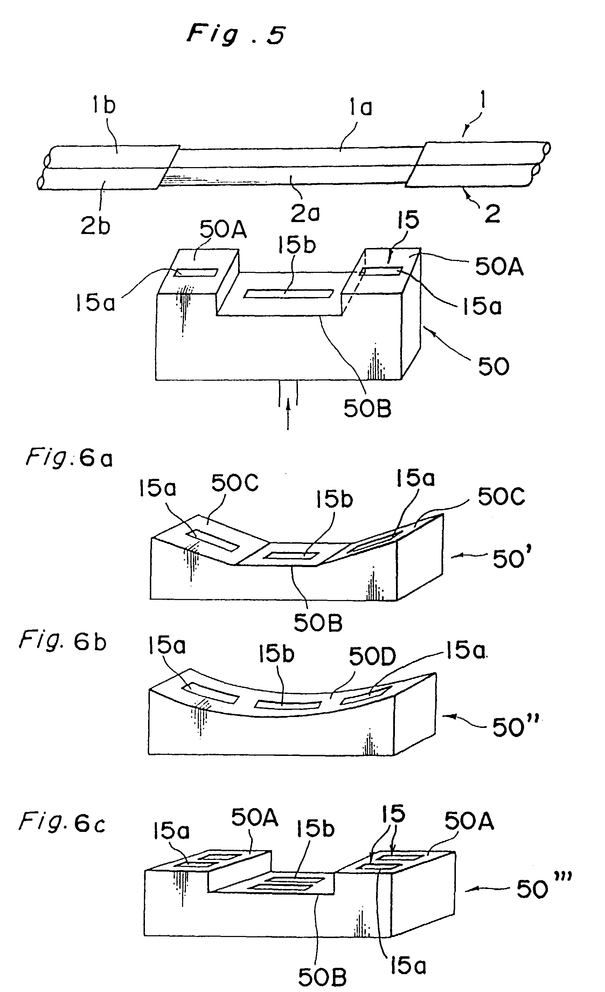

In addition, Fig. 5 shows a substantially U-shaped gas burner 50 employed in a production method according to a third embodiment of the present invention, while Figs. 6a to 6c show gas burners 50' to 50"' which are first to third modifications of the gas burner 50, respectively. The gas burners 50 and 50' to 50"' are similar to the gas burners 40 and 40' to 40', respectively and have burner bodies identical with those of the gas burners 40 and 40' to 40"', i.e. those of the gas burners 30 and 30' to 30"', respectively. In the gas burners 50 and 50' to 50"', the slitlike gas nozzle 15 is divided into a pair of opposite slitlike gas nozzles 15a and a central slitlike gas nozzle 15b. Since other constructions of the gas burners 50 and 50' to 50"' are similar to those of the gas burners 40 and 40' to 40"', respectively, description thereof is abbreviated for the sake of brevity.

In accordance with the third embodiment of the present invention, the optical fiber couplers having excellent characteristics can be produced stably in the same manner as in the first embodiment of the present invention.

In a concrete example, a coating layer is removed over a length of about 30 mm from each optical fiber such that a glass portion of each optical fiber is obtained. Then, the glass portions are so secured as to extend in parallel along each other. Subsequently, the glass portions are heated by the gas burner for 1 min. so as to be fusion bonded to each other integrally. At this time, oxygen and propane gas are, respectively, used as combustion gas at flow rates of 130 cc/min. and 65 cc/min. Thereafter, while opposite portions of the optical fibers, which interpose the glass portions, respectively therebetween, are being subjected to a tension of 3 g, the integral glass portions are again heated by the gas burner so as to be stretched. Then, light from a laser diode is introduced into one end of the two. optical fibers. While light emitted from the other end of the two optical fibers is being monitored, the integral glass portions are stretched. Thus, at the time when intensity of light emitted by one of the optical fibers becomes identical with that of the other of the optical fibers, stretching of the integral glass portions is terminated.

## Claims

1. A method of producing an optical fiber coupler, comprising a first step in which a plurality of glass optical fibers (1, 2) are arranged in parallel with each other, a second step in which denuded portions (1a, 2a) of the glass optical fibers thus arranged in parallel are heated so as to be fusion bonded to each other integrally, and a third step in which the fusion bonded denuded portions (1a, 2a) are further heated and stretched, the method further comprising:
using an elongate gas burner (30, 30', 30", 30"') having a plurality of gas nozzles (25) disposed along the length thereof as a source of heat for said third step, said elongate gas burner being fixed in position in the vicinity of said fusion bonded denuded portions (1a, 2a) during the further heating and stretching thereof such that the gas nozzles (25) extend along the longitudinal direction of said fusion bonded denuded portions,
**characterized in that**
the gas nozzles (25) include first gas nozzles (25a) disposed at opposite end portions of the elongate gas burner and second gas nozzles (25b) disposed at a central portion of the gas burner, said second gas nozzles (25b) being spaced farther away from said fusion bonded denuded portions (1a, 2a) than are the first gas nozzles (25a);
and in that said elongate gas burner (30, 30', 30", 30"') is also used as a source of heat for said second step.

2. A method as claimed in Claim 1, wherein the opposite end portions of the gas burner (30, 30"') comprise a pair of flat upper faces (30A, 30A) and the central portion of the gas burner comprises a recessed flat upper face (30B); the first gas nozzles (25a) being provided on said pair of flat upper faces (30A, 30A) and the second gas nozzles (25b) being provided on said recessed flat upper face (30B).

3. A method as claimed in Claim 1, wherein the central portion of the gas burner (30') has a flat upper face (30B) and the opposite end portions of the gas burner comprise a pair of oblique upper faces (30C, 30C) inclined downwardly towards said flat upper face (30B), the first gas nozzles (25a) being provided on said oblique upper faces (30C, 30C) and the second gas nozzles (25b) being provided on said flat upper face (30B) of said central portion.

4. A method as claimed in Claim 1, wherein the gas burner (30") has a concavely arcuate upper face (30D) and said gas nozzles (25) are provided on said concavely arcuate upper face (30D).

5. A method as claimed in Claim 2, wherein the gas burner (30"') has a plurality of rows of the gas nozzles (25) such that the rows extend in parallel with the longitudinal direction of the optical fibers (1, 2).

6. A method of producing an optical fiber coupler, comprising a first step in which a plurality of glass optical fibers (1, 2) are arranged in parallel with each other, a second step in which denuded portions (1a, 2a) of the glass optical fibers thus arranged in parallel are heated so as to be fusion bonded to each other integrally, and a third step in which the fusion bonded denuded portions (1a, 2a) are further heated and stretched, the method further comprising:
using an elongate gas burner (40, 40', 40",40"') as a source of heat for said third step, said elongate gas burner being fixed in position in the vicinity of said fusion bonded denuded portions (1a, 2a) during the further heating and stretching thereof,
characterized in that
said elongate gas burner (40, 40', 40", 40"') has a slitlike gas nozzle (15) extending along the length thereof, said elongate gas burner being fixed in position in a manner such that the slitlike gas nozzle (15) extends along the longitudinal direction of Said fusion bonded denuded portions (1a, 2a), said slitlike gas nozzle (15) at a central portion of the elongate gas burner being spaced farther away from said fusion bonded denuded portions (1a, 2a) than is the slitlike gas nozzle (15) at opposite end portions of the elongate gas burner; and in that said elongate gas burner (40, 40', 40'', 40"') is also used as a source of heat for said second step.

7. A method as claimed in Claim 6, wherein the opposite end portions of the gas burner (40, 40"') comprise a pair of flat upper faces (40A, 40) and the central portion of the gas burner comprises a recessed flat upper face (40B), said slitlike gas nozzle (15) being provided on said pair of flat upper faces (40A, 40A) and said recessed flat upper face (4013).

8. A method as claimed in Claim 6, wherein the central portion of the gas burrer (40') has a flat upper face (40B) and the opposite end portions of the gas burner comprise a pair of oblique upper faces (40C, 40C) inclined downwardly towards the flat upper face (40B), said slitlike gas nozzle (15) being provided on said oblique upper faces (40C, 40C) and said flat upper face (40B) of said central portion.

9. A method as claimed in Claim 6, wherein the gas burner (40") has a concavely arcuate upper face, said slitlike gas nozzle (15) being provided on said concavely arcuate upper face (40D).

10. A method as claimed in Claim 7, wherein the gas burner (40"') has a plurality of rows of the gas nozzles (15) such that the rows extend in parallel with the longitudinal direction of the optical fibers (1,2).

11. A method of producing an optical fiber coupler, comprising a first step in which a plurality of glass optical fibers (1, 2) are arranged in parallel with each other, a second step in which denuded portions (1a, 2a) of the glass optical fibers thus arranged in parallel are heated so as to be fusion bonded to each other integrally, and a third step in which the fusion bonded denuded portions (1a, 2a) are further heated and stretched, the method further comprising:
using an elongate gas burner (50, 50', 50", 50"') as a source of heat for said third step, said elongate gas burner being fixed in position in the vicinity of said fusion bonded denuded portions (1a, 2a) during the further heating and stretching thereof,
characterized in that
said elongate gas burner (50, 50', 50', 50"') has slitlike gas nozzles (15a, 15b) extending along the length thereof, which include a pair of first slitlike gas nozzles (15a) disposed at opposite end portions of the elongate gas burner and a second slitlike gas nozzle (15b) disposed at a central portion of the gas burner, said elongate gas burner being fixed in position in a manner such that said first and second slitlike gas nozzles extend along the longitudinal direction of said fusion bonded denuded portions (1a, 2a),
said second slitlike gas nozzle (15b) being spaced farther away from said fusion bonded denuded portions (1a, 2a) than are the first slitlike gas nozzles (15a, 15a); and in that said elongate gas burner (50, 50', 50", 50"') is also used as a source of heat for said second step.

12. A method as claimed in Claim 11, wherein the opposite end portions of the gas burner (50, 50"') comprise a pair of flat upper faces (50A, 50A), and the central portion of the gas burner comprises a recessed flat upper face (50B), said first slitlike gas nozzles (15a, 15a) being provided on said pair of flat upper surfaces (50A, 50A) and said second slitlike gas nozzle (15b) being provided on said recessed flat upper face (50B).

13. A method as claimed in Claim 11, wherein the central portion of the gas burner (50') has a flat upper face (50B) and the opposite end portions of the gas burner comprise a pair of oblique upper faces (50C, 50C) inclined downwardly towards said flat upper face (50B), said first slitlike gas nozzles (15a, 15a) being provided on said oblique upper faces (50c, 50c) and said second slitlike gas nozzle (15b) is provided on said flat upper face (50B).

14. A method as claimed in Claim 11, wherein the gas burner (50") has a convcavely arcuate upper face (50D) such that the first slitlike gas nozzles (15a) and the second slitlike gas nozzle (15b) are provided on the concavely arcuate upper face.

15. A method as claimed in Claim 12, wherein the gas burner (50"') has a plurality of rows of the first slitlike gas nozzles (15a) and of the second slitlike gas nozzle (15b) such that said rows extend in parallel with the longitudinal direction of the optical fibers (1, 2).

16. An apparatus for carrying out the method defined in any one of the Claims 1 to 5, comprising:
means for maintaining denuded portions (1a, 2a) of a plurality of glass optical fibers (1, 2) in parallel with each other along a predetermined longitudinal direction so as to enable them to be fusion bonded with each other integrally by heating, and for stretching the fusion bonded denuded portions along said longitudinal direction during further heating thereof; and
an elongate gas burner(30, 30', 30", 30"') having a plurality of gas nozzles (25) disposed along the length thereof, said elongate gas burner being fixed in position in the vicinity of said predetermined longitudinal direction such that the gas nozzles (25) extend along the longitudinal direction of said denuded portions for the heating thereof,
characterized in that
the gas nozzles (25) include first gas nozzles (25a) disposed at opposite end portions of the elongate gas burner and second gas nozzles (25b) disposed at a central portion of the gas burner, said second gas nozzles (25b) being spaced farther away from said denuded portions (1a, 2a) than are the first gas nozzles (25a).

17. Apparatus as in Claim 16, wherein the opposite end portions of the gas burner (30, 30"') comprise a pair of flat upper faces (30A, 30A) and the central portion of the gas burner comprises a recessed flat upper face (30B); the first gas nozzles (25a) being provided on said pair of flat upper faces (30A, 30A) and the second gas nozzles (25b) being provided on said recessed flat upper face (30B).

18. Apparatus as claimed in Claim 16, wherein the central portion of the gas burner (30') has a flat upper face (30B) and the opposite end portions of the gas burner comprise a pair of oblique upper faces (30C, 30C) inclined downwardly towards said flat upper face (30B), the first gas nozzles (25a) being provided on said oblique upper faces (30C, 30C) and the second gas nozzles (25b) being provided on said flat upper face (30B) of said central portion.

19. Apparatus as claimed in Claim 16, wherein the gas burner (30") has a concavely arcuate upper face (30D) and said gas nozzles (25) are provided on said concavely arcuate upper face (30D).

20. Apparatus as claimed in Claim 17, wherein the gas burner (30"') has a plurality of rows of the gas nozzles (25) such that the rows extend in parallel with the longitudinal direction of the optical fibers (1, 2).

21. An apparatus for carrying out the method defined in any one of the Claims 6 to 10, comprising:
means for maintaining denuded portions (1a, 2a) of a plurality of glass optical fibers (1, 2) in parallel with each other along a predetermined longitudinal direction so as to enable them to be fusion bonded with each other integrally by heating, and for stretching the fusion bonded denuded portions along said longitudinal direction during further heating thereof; and an elongate gas burner (40, 40', 40", 40"') fixed in position in the vicinity of said denuded portions (1a, 2a) for the heating thereof,
characterized in that
said elongate gas burner has a slitlike gas nozzle (15) extending along the length thereof, said elongate gas burner being fixed in position in a manner such that the slitlike gas nozzle (15) extends along the longitudinal direction of said denuded portions,
said slitlike gas nozzle (15) at a central portion of the elongate gas burner being spaced farther away from said denuded portions (1a, 2a) than is the slitlike gas nozzle (15) at opposite end portions of the elongate gas burner.

22. Apparatus as claimed in Claim 21, wherein the opposite end portions of the gas burner (40, 40"') comprise a pair of flat upper faces (40A, 40A) and the central portion of the gas burner comprises a recessed flat upper face (40B), said slitlike gas nozzle (15) being provided on said pair of flat upper faces (40A, 40A) and said recessed flat upper face (40B).

23. Apparatus as claimed in Claim 21, wherein the central portion of the gas burner (40') has a flat upper face (40B) and the opposite end portions of the gas burner comprise a pair of oblique upper faces (40C, 40C) inclined downwardly towards the flat upper face (40B), said slitlike gas nozzle (15) being provided on said oblique upper faces (40C, 40C) and said flat upper face (40B) of said central portion.

24. Apparatus as claimed in Claim 21, wherein the gas burner (40") has a concavely arcuate upper face, said slitlike gas nozzle (15) being provided on said concavely arcuate upper face (40D).

25. Apparatus as claimed in Claim 22, wherein the gas burner (40"') has a plurality of rows of the gas nozzles (15) such that the rows extend in parallel with the longitudinal direction of the optical fibers (1,2).

26. An apparatus for carrying out the method defined in any one of the Claims 11 to 15, comprising:
means for maintaining denuded portions (1a, 2a) of a plurality of glass optical fibers (1, 2) in parallel with each other along a predetermined longitudinal direction so as to enable them to be fusion bonded with each other integrally by heating, and for stretching the fusion bonded denuded portions along said longitudinal direction during further heating thereof; and
an elongate gas burner (50, 50', 50", 50"') fixed in position in the vicinity of said denuded portions (1a, 2a) for the heating thereof,
characterized in that
said elongate gas burner (50, 50', 50", 50"') includes a pair of first slitlike gas nozzles (25a) disposed at opposite end portions of the elongate gas burner and a second slitlike gas nozzle disposed at a central portion of the gas burner, said elongate gas burner being fixed in position in a manner such that said first and second slitlike gas nozzles extend along the longitudinal direction of said denuded portions, said second slitlike gas nozzle (15b) being spaced farther away from said denuded portions (1a, 2a) than are the first slitlike gas nozzles (15a, 15a).

27. Apparatus as claimed in Claim 26, wherein the opposite end portions of the gas burner (50, 50"') comprise a pair of flat upper faces (50A, 50A), and the central portion of the gas burner comprises a recessed flat upper face (50B), said first slitlike gas nozzles (15a, 15a) being provided on said pair of flat upper surfaces (50A, 50A) and said second slitlike gas nozzle (15b) being provided on said recessed flat upper face (50B).

28. Apparatus as claimed in Claim 26, wherein the central portion of the gas burner (50') has a flat upper face (50B) and the opposite end portions of the gas burner comprise a pair of oblique upper faces (50C, 50C) inclined downwardly towards said flat upper face (50B), said first slitlike gas nozzles (15a, 15a) being provided on said oblique upper faces (50c, 50c) and said second slitlike gas nozzle (15b) is provided on said flat upper face (50B).

29. Apparatus as claimed in Claim 26, wherein the gas burner (50") has a convcavely arcuate upper face 50D) such that the first slitlike gas nozzles (15a) and the second slitlike gas nozzle (15b) are provided on the concavely arcuate upper face.

30. Apparatus as claimed in Claim 27, wherein the gas burner (50"') has a plurality of rows of the first slitlike gas nozzles (15a) and of the second slitlike gas nozzle (15b) such that said rows extend in parallel with the longitudinal direction of the optical fibers (1, 2).

## Patentansprüche

1. Verfahren zum Herstellen eines Lichtleiterkopplers, umfassend einen ersten Schritt, in dem eine Vielzahl von Glaslichtleitern (1, 2) parallel zueinander angeordnet werden, einen zweiten Schritt, in dem freigelegte Abschnitte (1a, 2a) der so parallel angeordneten Glaslichtleiter erhitzt werden, um einteilig miteinander schmelzverbunden zu werden, und einen dritten Schritt, in dem die schmelzverbundenen freigelegten Abschnitte (1a, 2a) weiter erhitzt und gedehnt werden, wobei das Verfahren weiter umfaßt:
das Benutzen eines länglichen Gasbrenners (30, 30', 30", 30"'), der eine Vielzahl von entlang seiner Länge angeordneten Gasdüsen (25) aufweist, als eine Hitzequelle für den dritten Schritt, wobei der längliche Gasbrenner während des weiteren Erhitzens und des Dehnens der schmelzverbundenen freigelegten Abschnitte (1a, 2a) in einer Position in der Nähe dieser Abschnitte gehalten ist, so daß sich die Gasdüsen (25) entlang der Längsrichtung der schmelzverbundenen freigelegten Abschnitte erstrecken,
dadurch **gekennzeichnet**, daß
die Gasdüsen (25) erste Gasdüsen (25a), die an gegenüberliegenden Endabschnitten des länglichen Gasbrenners angeordnet sind, und zweite Gasdüsen (25b) einschließen, die an einem Zentralabschnitt des Gasbrenners angeordnet sind, wobei die zweiten Gasdüsen (25b) weiter von den schmelzverbundenen freigelegten Abschnitten (1a, 2a) beabstandet sind, als es die ersten Gasdüsen (25a) sind;
und der längliche Gasbrenner (30, 30', 30", 30"') auch als Hitzequelle für den zweiten Schritt genutzt wird.

2. Verfahren nach Anspruch 1, wobei die gegenüberliegenden Endabschnitte des Gasbrenners (30, 30"') ein Paar flacher oberer Flächen (30A, 30A) umfassen und der Zentralabschnitt des Gasbrenners eine abgesetzte flache obere Fläche (30B) umfaßt; wobei die ersten Gasdüsen (25a) an dem Paar flacher oberer Flächen (30A, 30A) und die zweiten Gasdüsen (25b) an der abgesetzten flachen oberen Fläche (30B) vorgesehen sind.

3. Verfahren nach Anspruch 1, wobei der Zentralabschnitt des Gasbrenners (30') eine flache obere Fläche (30B) aufweist und die gegenüberliegenden Endabschnitte des Gasbrenners ein Paar schiefwinklige obere Flächen (30C, 30C) umfassen, abwärts zu der flachen oberen Fläche (30B) geneigt, wobei die ersten Gasdüsen (25a) an den schiefwinkligen oberen Flächen (30C, 30C) und die zweiten Gasdüsen (25b) an der flachen oberen Fläche (30B) des Zentralabschnitts vorgesehen sind.

4. Verfahren nach Anspruch 1, wobei der Gasbrenner (30") eine konkav gewölbte obere Fläche (30D) aufweist und die Gasdüsen (25) an der konkav gewölbten oberen Fläche (30D) vorgesehen sind.

5. Verfahren nach Anspruch 2, wobei der Gasbrenner (30"') eine Vielzahl von Reihen von Gasdüsen (25) derart aufweist, daß sich die Reihen parallel zu der Längsrichtung der Lichtleiter (1, 2) erstrecken.

6. Verfahren zum Herstellen eines Lichtleiterkopplers, umfassend einen ersten Schritt, in dem eine Vielzahl von Glaslichtleitern (1, 2) parallel zueinander angeordnet werden, einen zweiten Schritt, in dem freigelegte Abschnitte (1a, 2a) der so parallel angeordneten Glaslichtleiter erhitzt werden, um einteilig miteinander schmelzverbunden zu werden, und einen dritten Schritt, in dem die schmelzverbundenen freigelegten Abschnitte (1a, 2a) weiter erhitzt und gedehnt werden, wobei das Verfahren weiter umfaßt:
das Benutzen eines länglichen Gasbrenners (40, 40', 40", 40"') als eine Hitzequelle für den dritten Schritt, wobei der längliche Gasbrenner während des weiteren Erhitzens und des Dehnens der schmelzverbundenen freigelegten Abschnitte (1a, 2a) in einer Position in der Nähe dieser Abschnitte gehalten ist,
dadurch **gekennzeichnet**, daß
der längliche Gasbrenner (40, 40', 40", 40"') eine schlitzähnliche Gasdüse (15) aufweist, die sich entlang seiner Länge erstreckt, wobei der Gasbrenner in einer Weise in seiner Position gehalten wird, daß die schlitzähnliche Gasdüse (15) sich entlang der Längsrichtung der schmelzverbundenen freigelegten Abschnitte (1a, 2a) erstreckt, wobei die schlitzähnliche Gasdüse (15) an einem Zentralabschnitt des länglichen Gasbrenners weiter von den schmelzverbundenen freigelegten Abschnitten (1a, 2a) beabstandet ist, als es die schlitzähnliche Gasdüse (15) an gegenüberliegenden Endabschnitten des länglichen Gasbrenners ist; und daß der längliche Gasbrenner (40, 40', 40", 40"') auch als Hitzequelle für den zweiten Schritt benutzt wird.

7. Verfahren nach Anspruch 6, wobei die gegenüberliegenden Endabschnitte des Gasbrenners (40, 40"') ein Paar flacher oberer Flächen (40A, 40) umfassen, und der Zentralabschnitt des Gasbrenners eine abgesetzte flache obere Fläche (40B) umfaßt, wobei die schlitzähnliche Gasdüse (15) an dem Paar flacher oberer Flächen (40A, 40A) und der abgesetzten flachen oberen Fläche (40B) vorgesehen ist.

8. Verfahren nach Anspruch 6, wobei der Zentralabschnitt des Gasbrenners (40') eine flache obere Fläche (40B) aufweist und die gegenüberliegenden Endabschnitte des Gasbrenners ein Paar schiefwinklige obere Flächen (40C, 40C) umfassen, abwärts zu der flachen oberen Fläche (40B) geneigt, wobei die schlitzähnliche Gasdüse (15) an den schiefwinkligen oberen Flächen (40C, 40C) und der flachen oberen Fläche (40B) des Zentralabschnittes vorgesehen ist.

9. Verfahren nach Anspruch 6, wobei der Gasbrenner (40") eine konkav gewölbte obere Fläche aufweist, wobei die schlitzähnliche Gasdüse (15) an der konkav gewölbten oberen Fläche (40D) vorgesehen ist.

10. Verfahren nach Anspruch 7, wobei der Gasbrenner (40"') eine Vielzahl von Reihen von Gasdüsen (15) derart aufweist, daß sich die Reihen parallel zu der Längsrichtung der Lichtleiter (1, 2) erstrecken.

11. Verfahren zum Herstellen eines Lichtleiterkopplers, umfassend einen ersten Schritt, in dem eine Vielzahl von Glaslichtleitern (1, 2) parallel zueinander angeordnet werden, einen zweiten Schritt, in dem freigelegte Abschnitte (1a, 2a) der so parallel angeordneten Glaslichtleiter erhitzt werden, um einteilig miteinander schmelzverbunden zu werden, und einen dritten Schritt, in dem die schmelzverbundenen freigelegten Abschnitte (1a, 2a) weiter erhitzt und gedehnt werden, wobei das Verfahren weiter umfaßt:
das Benutzen eines länglichen Gasbrenners (50, 50', 50", 50"') als eine Hitzequelle für den dritten Schritt, wobei der längliche Gasbrenner während des weiteren Erhitzens und des Dehnens der schmelzverbundenen freigelegten Abschnitte (1a, 2a) in einer Position in der Nähe dieser Abschnitte gehalten ist,
dadurch **gekennzeichnet**, daß
der längliche Gasbrenner (50, 50', 50", 50"') schlitzähnliche Gasdüsen (15a, 15b) aufweist, die sich entlang seiner Länge erstrecken, und die ein Paar an gegenüberliegenden Endabschnitten des länglichen Gasbrenners angeordneter erster schlitzähnlicher Gasdüsen (15a), und eine an einem Zentralabschnitt des Gasbrenners angeordnete zweite schlitzähnliche Gasdüse (15b) einschließen, wobei der längliche Gasbrenner in einer Weise in seiner Position gehalten wird, daß sich die ersten und zweiten schlitzähnlichen Gasdüsen entlang der Längsrichtung der schmelzverbundenen freigelegten Abschnitte (1a, 2a) erstrecken,
wobei die zweite schlitzähnliche Gasdüse (15b) weiter von den schmelzverbundenen freigelegten Abschnitten (1a, 2a) beabstandet ist, als es die ersten schlitzähnlichen Gasdüsen (15a, 15a) sind;
und der längliche Gasbrenner (50, 50', 50", 50"') auch als Hitzequelle für den zweiten Schritt benutzt wird.

12. Verfahren nach Anspruch 11, wobei die gegenüberliegenden Endabschnitte des Gasbrenners (50, 50"') ein Paar flacher oberer Flächen (50A, 50A) umfassen und der Zentralabschnitt des Gasbrenners eine abgesetzte flache obere Fläche (50B) umfaßt; wobei die ersten Gasdüsen (15a, 15a) an dem Paar flacher oberer Flächen (50A, 50A) und die zweite Gasdüse (15b) an der abgesetzten flachen oberen Fläche (50B) vorgesehen sind.

13. Verfahren nach Anspruch 11, wobei der Zentralabschnitt des Gasbrenners (50') eine flache obere Fläche (50B) aufweist und die gegenüberliegenden Endabschnitte des Gasbrenners ein Paar schiefwinklige obere Flächen (50C, 50C) umfassen, abwärts zu der flachen oberen Fläche (50B) geneigt, wobei die ersten Gasdüsen (15a, 15a) an den schiefwinkligen oberen Flächen (50C, 50C) und die zweite Gasdüse (15b) an der flachen oberen Fläche (50B) vorgesehen sind.

14. Verfahren nach Anspruch 11, wobei der Gasbrenner (50") eine konkav gewölbte obere Fläche (50D) aufweist, so daß die ersten schlitzähnlichen Gasdüsen (15a) und die zweite schlitzähnliche Gasdüse (15b) an der konkav gewölbten oberen Fläche (50D) vorgesehen sind.

15. Verfahren nach Anspruch 12, wobei der Gasbrenner (50"') eine Vielzahl von Reihen der ersten schlitzähnlichen Gasdüsen (15a) und von zweiten schlitzähnlichen Gasdüsen (15b) derart aufweist, daß sich die Reihen parallel zu der Längsrichtung der Lichtleiter (1, 2) erstrecken.

16. Vorrichtung zum Durchführen des in einem der Ansprüche 1 bis 5 definierten Verfahrens, umfassend:
eine Einrichtung zum Halten freigelegter Abschnitte (1a, 2a) einer Vielzahl von Glaslichtleitern (1, 2) parallel zueinander entlang einer vorbestimmten Längsrichtung, so daß sie durch Erhitzen einteilig miteinander schmelzverbindbar sind und zum Dehnen der schmelzverbundenen freigelegten Abschnitte entlang der Längsrichtung während ihres weiteren Erhitzens; und einen länglichen Gasbrenner (30, 30', 30", 30"'), der eine Vielzahl von entlang seiner Länge angeordneten Gasdüsen (25) aufweist, wobei der längliche Gasbrenner in einer Position in der Nähe der vorbestimmten Längsrichtung gehalten ist, so daß sich die Gasdüsen (25) entlang der Längsrichtung der freigelegten Abschnitte zum Erhitzen dieser erstrecken,
dadurch **gekennzeichnet**, daß
die Gasdüsen (25) erste Gasdüsen (25a), die an gegenüberliegenden Endabschnitten des länglichen Gasbrenners angeordnet sind und zweite Gasdüsen (25b) einschließen, die an einem Zentralabschnitt des Gasbrenners angeordnet sind, wobei die zweiten Gasdüsen (25b) weiter von den freigelegten Abschnitten (1a, 2a) beabstandet sind, als es die ersten Gasdüsen (25a) sind.

17. Vorrichtung nach Anspruch 16, wobei die gegenüberliegenden Endabschnitte des Gasbrenners (30, 30"') ein Paar flacher oberer Flächen (30A, 30A) umfassen und der Zentralabschnitt des Gasbrenners eine abgesetzte flache obere Fläche (30B) umfaßt; wobei die ersten Gasdüsen (25a) an dem Paar flacher oberer Flächen (30A, 30A) und die zweiten Gasdüsen (25b) an der abgesetzten flachen oberen Fläche (30B) vorgesehen sind.

18. Vorrichtung nach Anspruch 16, wobei der Zentralabschnitt des Gasbrenners (30') eine flache obere Fläche (30B) aufweist und die gegenüberliegenden Endabschnitte des Gasbrenners ein Paar schiefwinklige obere Flächen (30C, 30C) umfassen, abwärts zu der flachen oberen Fläche (30B) geneigt, wobei die ersten Gasdüsen (25a) an den schiefwinkligen oberen Flächen (30C, 30C) und die zweiten Gasdüsen (25b) an der flachen oberen Fläche (30B) des Zentralabschnitts vorgesehen sind.

19. Vorrichtung nach Anspruch 16, wobei der Gasbrenner (30") eine konkav gewölbte obere Fläche (30D) aufweist und die Gasdüsen (25) an der konkav gewölbten oberen Fläche (30D) vorgesehen sind.

20. Vorrichtung nach Anspruch 17, wobei der Gasbrenner (30"') eine Vielzahl von Reihen von Gasdüsen (25) derart aufweist, daß sich die Reihen parallel zu der Längsrichtung der Lichtleiter (1, 2) erstrecken.

21. Vorrichtung zum Durchführen der in einem der Ansprüche 6 bis 10 definierten Verfahren, umfassend:
eine Einrichtung zum Halten freigelegter Abschnitte (1a, 2a) einer Vielzahl von Glaslichtleitern (1, 2) parallel zueinander entlang einer vorbestimmten Längsrichtung, so daß sie durch Erhitzen einteilig miteinander schmelzverbindbar sind und zum Dehnen der schmelzverbundenen freigelegten Abschnitte entlang der Längsrichtung während ihres weiteren Erhitzens; und einen länglichen Gasbrenner (40, 40', 40", 40"'), der in einer Position in der Nähe der freigelegten Abschnitte zum Erhitzen dieser gehalten ist,
dadurch **gekennzeichnet**, daß
der längliche Gasbrenner eine schlitzähnliche Gasdüse (15) aufweist, die sich entlang seiner Länge erstreckt, wobei der Gasbrenner in einer Weise in seiner Position gehalten ist, daß sich die schlitzähnliche Gasdüse (15) entlang der Längsrichtung der freigelegten Abschnitte erstreckt,
wobei die schlitzähnliche Gasdüse (15) an einem Zentralabschnitt des länglichen Gasbrenners weiter von den freigelegten Abschnitten (1a, 2a) beabstandet ist, als es die schlitzähnliche Gasdüse (15) an gegenüberliegenden Endabschnitten des länglichen Gasbrenners ist.

22. Vorrichtung nach Anspruch 21, wobei die gegenüberliegenden Endabschnitte des Gasbrenners (40, 40"') ein Paar flacher oberer Flächen (40A, 40A) umfassen und der Zentralabschnitt des Gasbrenners eine abgesetzte flache obere Fläche (40B) umfaßt; wobei die schlitzähnliche Gasdüse (15) an dem Paar flacher oberer Flächen (40A, 40A) und an der abgesetzten flachen oberen Fläche (40B) vorgesehen ist.

23. Vorrichtung nach Anspruch 21, wobei der Zentralabschnitt des Gasbrenners (40') eine flache obere Fläche (40B) aufweist und die gegenüberliegenden Endabschnitte des Gasbrenners ein Paar schiefwinklige obere Flächen (40C, 40C) umfassen, abwärts zu der flachen oberen Fläche (40B) geneigt, wobei die schlitzähnliche Gasdüse (15) an den schiefwinkligen oberen Flächen (40C, 40C) und an der flachen oberen Fläche (40B) des Zentralabschnitts vorgesehen ist.

24. Vorrichtung nach Anspruch 21, wobei der Gasbrenner (40") eine konkav gewölbte obere Fläche (40D) aufweist und die schlitzähnliche Gasdüse (25) an der konkav gewölbten oberen Fläche (40D) vorgesehen ist.

25. Vorrichtung nach Anspruch 22, wobei der Gasbrenner (40"') eine Vielzahl von Reihen von Gasdüsen (15) derart aufweist, daß sich die Reihen parallel zu der Längsrichtung der Lichtleiter (1, 2) erstrecken.

26. Vorrichtung zum Durchführen des in einem der Ansprüche 11 bis 15 definierten Verfahrens, umfassend: eine Einrichtung zum Halten freigelegter Abschnitte (1a, 2a) einer Vielzahl von Glaslichtleitern (1, 2) parallel zueinander entlang einer vorbestimmten Längsrichtung, so daß sie durch Erhitzen einteilig miteinander schmelzverbindbar sind und zum Dehnen der schmelzverbundenen freigelegten Abschnitte entlang der Längsrichtung während ihres weiteren Erhitzens; und einen länglichen Gasbrenner (50, 50', 50", 50"'), der in einer Position in der Nähe der freigelegten Abschnitte zum Erhitzen dieser gehalten ist,
dadurch **gekennzeichnet**, daß der längliche Gasbrenner (50, 50', 50", 50"') ein Paar an gegenüberliegenden Endabschnitten des länglichen Gasbrenners angeordneter erster schlitzähnlicher Gasdüsen (25a), und eine an einem Zentralabschnitt des Gasbrenners angeordnete zweite schlitzähnliche Gasdüse einschließt, wobei der längliche Gasbrenner in einer Weise in seiner Position gehalten ist, daß sich die ersten und zweiten schlitzähnlichen Gasdüsen entlang der Längsrichtung der freigelegten Abschnitte (1a, 2a) erstrecken,
wobei die zweite schlitzähnliche Gasdüse (15b) weiter von den freigelegten Abschnitten (1a, 2a) beabstandet ist, als es die ersten schlitzähnlichen Gasdüsen (15a, 15a) sind.

27. Vorrichtung nach Anspruch 26, wobei die gegenüberliegenden Endabschnitte des Gasbrenners (50, 50"') ein Paar flacher oberer Flächen (50A, 50A) umfassen und der Zentralabschnitt des Gasbrenners eine abgesetzte flache obere Fläche (50B) umfaßt; wobei die ersten schlitzähnlichen Gasdüsen (15a, 15a) an dem Paar flacher oberer Flächen (50A, 50A) und die zweite schlitzähnliche Gasdüse (15b) an der abgesetzten flachen oberen Fläche (50B) vorgesehen ist.

28. Vorrichtung nach Anspruch 26, wobei der Zentralabschnitt des Gasbrenners (50') eine flache obere Fläche (50B) aufweist und die gegenüberliegenden Endabschnitte des Gasbrenners ein Paar schiefwinklige obere Flächen (50C, 50C) umfassen, abwärts zu der flachen oberen Fläche (50B) geneigt, wobei die ersten schlitzähnlichen Gasdüsen (15a, 15a) an den schiefwinkligen oberen Flächen (50C, 50C) und die zweite schlitzähnliche Gasdüse (15b) an der flachen oberen Fläche (50B) vorgesehen ist.

29. Vorrichtung nach Anspruch 26, wobei der Gasbrenner (50") eine konkav gewölbte obere Fläche (50D) aufweist, so daß die ersten schlitzähnlichen Gasdüsen (15a) und die zweite schlitzähnliche Gasdüse (15b) an der konkav gewölbten oberen Fläche vorgesehen ist.

30. Vorrichtung nach Anspruch 27, wobei der Gasbrenner (50"') eine Vielzahl von Reihen der ersten schlitzähnlichen Gasdüsen (15a) und der zweiten schlitzähnlichen Gasdüse (15b) derart aufweist, daß sich die Reihen parallel zu der Längsrichtung der Lichtleiter (1, 2) erstrecken.

## Revendications

1. Procédé de production d'un coupleur à fibre optique, comportant une première étape dans laquelle on dispose une pluralité de fibres optiques de verre (1, 2) parallèlement l'une à l'autre, une seconde étape dans laquelle on chauffe les portions dénudées (1a, 2a) des fibres optiques de verre ainsi disposées parallèlement de façon à les lier l'une à l'autre par fusion pour former une fibre unique, et une troisième étape dans laquelle on continue à chauffer les portions dénudées (1a, 2a), liées par fusion, et on les étire, procédé consistant en outre à:
utiliser comme source de chaleur pour ladite troisième étape un brûleur à gaz de forme allongée (30, 30', 30", 30"'), présentant une pluralité de buses à gaz (25) disposées sur sa longueur, ledit brûleur à gaz de forme allongée étant fixe en position au voisinage desdites portions dénudées (1a, 2a), liées par fusion, au cours de la poursuite de leur chauffage et au cours de leur étirage, de façon que les buses à gaz (25) s'étendent le long de la direction longitudinale desdites portions dénudées, liées par fusion,
caractérisé par le fait que
les buses à gaz (25) incluent des premières buses à gaz (25a) disposées aux portions d'extrémité opposées du brûleur à gaz de forme allongée et des secondes buses à gaz (25b) disposées à la portion centrale du brûleur à gaz, lesdites secondes buses à gaz (25b) étant plus espacées desdites portions dénudées (1a, 2a), liées par fusion, que ne le sont les premières buses à gaz (25a),
et que ledit brûleur à gaz forme allongée (30, 30', 30", 30"') est également utilisé comme source de chaleur pour ladite seconde étape.

2. Procédé comme revendiqué dans la revendication 1, dans lequel les portions d'extrémité opposées du brûleur à gaz (30, 30"') comportent une paire de faces supérieures plates (30A, 30A) et la portion centrale du brûleur à gaz comporte une face supérieure plate en retrait (30B); les premières buses à gaz (25a) étant prévues sur ladite paire de faces supérieures plates (30A, 30A) et les secondes buses à gaz (25b) étant prévues sur ladite face supérieure plate en retrait (30B).

3. Procédé comme revendiqué dans la revendication 1, dans lequel la portion centrale du brûleur à gaz (30') a une face supérieure plate (30D) et les portions d'extrémité opposées du brûleur à gaz comportent une paire de faces supérieure obliques (30C, 30C) inclinées vers le bas en direction de ladite face supérieure plate (30B), les premières buses à gaz (25a) étant prévues sur lesdites faces supérieures obliques (30C, 30C) et les secondes buses à gaz (25b) étant prévues sur ladite face supérieure plate (30B) de ladite portion centrale.

4. Procédé comme revendiqué dans la revendication 1, dans lequel le brûleur à gaz (30") a une face supérieure en arc concave (30D) et lesdites buses à gaz (25) sont prévues sur ladite face supérieure en arc concave (30D).

5. Procédé comme revendiqué dans la revendication 2, dans lequel le brûleur à gaz (30"') a une pluralité de rangées de buses à gaz (25) telles que les rangées s'étendent parallèlement à la direction longitudinale des fibres optiques (1, 2).

6. Procédé de production d'un coupleur à fibre optique, comportant une première étape dans laquelle on dispose une pluralité de fibres optiques de verre (1, 2) parallèlement l'une à l'autre, une seconde étape dans laquelle on chauffe les portions dénudées (1a, 2a) des fibres optiques de verre ainsi disposées parallèlement de façon à les lier l'une à l'autre par fusion pour former une fibre unique, et une troisième étape dans laquelle on continue à chauffer les portions dénudées (1a, 2a), liées par fusion, et on les étire, procédé consistant en outre à:
utiliser comme source de chaleur pour ladite troisième étape un brûleur à gaz de forme allongée (40, 40', 40", 40"'), ledit brûleur à gaz de forme allongée étant fixe en position au voisinage desdites portions dénudées (1a, 2a), liées par fusion, au cours de la poursuite de leur chauffage et au cours de leur étirage,
caractérisé par le fait que
ledit brûleur à gaz de forme allongée (40, 40', 40", 40"') a une buse à gaz (15) en forme de fente qui s'étend sur sa longueur, ledit brûleur à gaz de forme allongée étant fixe en position de façon que la buse à gaz en forme de fente (15) s'étende le long de la direction longitudinale desdites portions dénudées (1a, 2a), liées par fusion, ladite buse à gaz en forme de fente (15), située à une portion centrale du brûleur à gaz de forme allongée, étant plus espacée desdites portions dénudées (1a, 2a), liées par fusion, que ne l'est la buse à gaz en forme de fente (15) située aux portions d'extrémité opposées du brûleur à gaz de forme allongée; et en ce que ledit brûleur à gaz de forme allongée (40, 40', 40", 40"') sert également comme source de chaleur pour ladite seconde étape.

7. Procédé comme revendiqué dans la revendication 6, dans lequel les portions d'extrémité opposées du brûleur à gaz (40, 40"') comportent une paire de faces supérieures plates (40A, 40A) et la portion centrale du brûleur à gaz comporte une face supérieure plate en retrait (40B), ladite buse à gaz en forme de fente (15) étant prévue sur ladite paire de faces supérieures plates (40A, 40A) et sur ladite face supérieure en retrait (40B).

8. Procédé comme revendiqué dans la revendication 6, dans lequel la portion centrale du brûleur à gaz (40') a une face supérieure plate (40B) et les portions d'extrémité opposées du brûleur à gaz comportent une paire de faces supérieures obliques (40C, 40C) inclinées vers le bas en direction de la face supérieure plate (40B), ladite buse à gaz en forme de fente (15) étant prévue sur lesdites faces supérieures obliques (40C, 40C) et sur ladite face supérieure plate (40B) de ladite portion centrale.

9. Procédé comme revendiqué dans la revendication 6, dans lequel le brûleur à gaz (40') a une face supérieure en arc concave, ladite buse à gaz en forme de fente (15) étant prévue sur ladite face supérieure en arc concave (40D).

10. Procédé comme revendiqué dans la revendication 7, dans lequel le brûleur à gaz (40"') a une pluralité de rangées de buses à gaz (15) telles que les rangées s'étendent parallèlement à la direction longitudinale des fibres optiques (1, 2).

11. Procédé de production d'un coupleur à fibre optique, comportant une première étape dans laquelle on dispose une pluralité de fibres optiques de verre (1, 2) parallèlement l'une à l'autre, une seconde étape dans laquelle on chauffe les portions dénudées (1a, 2a) des fibres optiques de verre ainsi disposées parallèlement de façon à les lier l'une à l'autre par fusion pour former une fibre unique, et une troisième étape dans laquelle on continue à chauffer les portions dénudées (1a, 2a), liées par fusion, et on les étire, procédé consistant en outre à:
utiliser comme source de chaleur pour ladite troisième étape un brûleur à gaz de forme allongée (50, 50', 50", 50"'), ledit brûleur à gaz de forme allongée étant fixe en position au voisinage desdites portions dénudées (1a, 2a), liées par fusion, au cours de la poursuite de leur chauffage et au cours de leur étirage,
caractérisé par le fait que
ledit brûleur à gaz de forme allongée (50, 50', 50", 50"') a des buses à gaz en forme de fente (15a, 15b) qui s'étendent sur sa longueur et incluent une paire de premières buses à gaz en forme de fente (15a) disposées aux portions d'extrémité opposées du brûleur à gaz de forme allongée et une seconde buse à gaz en forme de fente (15b disposée à une portion centrale du brûleur à gaz, ledit brûleur à gaz de forme allongée étant fixe en position de façon que lesdites premières et ladite seconde buses à gaz en forme de fente s'étendent le long de la direction longitudinale desdites portions dénudées (1a, 2a), liées par fusion,
ladite seconde buse à gaz en forme de fente (15b) étant plus espacée desdites portions dénudées (1a, 2a), liées par fusion, que ne le sont les premières buses à gaz en forme de fente (15a, 15a);
et en ce que ledit brûleur à gaz de forme allongée (50, 50', 50", 50"') sert également comme source de chaleur pour ladite seconde étape.

12. Procédé comme revendiqué dans la revendication 11, dans lequel les portions d'extrémité opposées du brûleur à gaz (50, 50', 50", 50"') comportent une paire de faces supérieures plates (50A, 50A), et la portion centrale du brûleur à gaz comporte une face supérieure plate en retrait (50b), lesdites premières buses à gaz en forme de fente (15a, 15a) étant prévues sur ladite paire de faces supérieures plates (50A) et 50A) et ladite seconde buse à gaz en forme de fente (15b) étant prévue sur ladite face supérieure plate en retrait (50B).

13. Procédé comme revendiqué dans la revendication 11, dans lequel la portion centrale du brûleur à gaz (50') a une face supérieure plate (50B) et les portions d'extrémité opposées du brûleur à gaz comportent une paire de faces supérieures obliques (50C, 50C) inclinées vers le bas en direction de ladite face supérieure plate (50B), lesdites premières buses à gaz en forme de fente (15a, 15a) étant prévues sur lesdites faces supérieures obliques (50C, 50C) et ladite seconde buse à gaz en forme de fente (15b) est prévue sur ladite face supérieure plate (50B).

14. Procédé comme revendiqué dans la revendication 11, dans lequel le brûleur à gaz (50") a une face supérieure en arc concave (50D) telle que les premières buses à gaz en forme de fente (15a) et la seconde buse à gaz en forme (15b) sont prévues sur la face supérieure en arc concave.

15. Procédé comme revendiqué dans la revendication 12, dans lequel le brûleur à gaz (50"') a une pluralité de rangées des premières buses à gaz en forme de fente (15a) et de la seconde buse à gaz en forme de fente (15b) telles que lesdites rangées s'étendent parallèlement à la direction longitudinale des fibres optiques (1, 2).

16. Appareil pour mettre en oeuvre le procédé défini dans l'une quelconque des revendications 1 à 5, comportant: des moyens pour maintenir des portions dénudées (1a, 2a) d'une pluralité de fibres optiques en verre (1, 2) parallèlement l'une à l'autre le long d'une direction longitudinale prédéterminée de façon à permettre de les lier par fusion l'une à l'autre, pour former une fibre unique, en les chauffant et pour étirer les portions dénudées, liées par fusion, le long de ladite direction longitudinale au cours de la poursuite de leur chauffage; et
un brûleur à gaz de forme allongée (30, 30', 30", 30"') ayant une pluralité de buses à gaz (25) disposées sur sa longueur, ledit brûleur à gaz de forme allongée étant fixe en position au voisinage de ladite direction longitudinale prédéterminée de façon que les buses à gaz (25) s'étendent le long de la direction longitudinale desdites portions dénudées, pour les chauffer, caractérisé par le fait que
les buses les buses à gaz (25) incluent des premières buses à gaz (25a) disposées aux portions d'extrémité opposées du brûleur à gaz de forme allongée et des secondes buses à gaz (25b) disposées à la portion centrale du brûleur à gaz, lesdites secondes buses à gaz (25b) étant plus espacées desdites portions dénudées (1a, 2a) que ne le sont les premières buses à gaz (25a).

17. Appareil comme dans la revendication 16, dans lequel les portions d'extrémité opposées du brûleur à gaz (30, 30"') comportent une paire de faces supérieures plates (30A, 30A) et la portion centrale du brûleur à gaz comporte une face supérieure plate en retrait (30B); les premières buses à gaz (25a) étant prévues sur ladite paire de faces supérieures plates (30A, 30A) et les secondes buses à gaz (25b) étant prévues sur ladite face supérieure plate en retrait (30B).

18. Appareil comme dans la revendication 16, dans lequel la portion centrale du brûleur à gaz (30') a une face supérieure plate (30D) et les portions d'extrémité opposées du brûleur à gaz comportent une paire de faces supérieure obliques (30C, 30C) inclinées vers le bas en direction de ladite face supérieure plate (30B), les premières buses à gaz (25a) étant prévues sur lesdites faces supérieures obliques (30C, 30C) et les secondes buses à gaz (25b) étant prévues sur ladite face supérieure plate (30B) de ladite portion centrale.

19. Appareil comme dans la revendication 16, dans lequel le brûleur à gaz (30") a une face supérieure en arc concave (30D) et lesdites buses à gaz (25) sont prévues sur ladite face supérieure en arc concave (30D).

20. Appareil comme dans la revendication 17, dans lequel le brûleur à gaz (30"') a une pluralité de rangées de buses à gaz (25) telles que les rangées s'étendent parallèlement à la direction longitudinale des fibres optiques (1, 2).

21. Appareil pour mettre en oeuvre le procédé défini dans l'une quelconque des revendications 6 à 10, comportant:
des moyens pour maintenir des portions dénudées (1a, 2a) d'une pluralité de fibres optiques en verre (1, 2) parallèlement l'une à l'autre le long d'une direction longitudinale prédéterminée de façon à permettre de les lier par fusion l'une à l'autre, pour former une fibre unique, en les chauffant et pour étirer les portions dénudées, liées par fusion, le long de ladite direction longitudinale au cours de la poursuite de leur chauffage; et un brûleur à gaz de forme allongée (40, 40',40", 40"') fixe en position au voisinage desdites portions dénudées (1a, 2a), pour les chauffer,
caractérisé par le fait que
ledit brûleur à gaz de forme allongée a une buse à gaz en forme de fente (15) qui s'étend sur sa longueur, ledit brûleur à gaz de forme allongée étant fixe en position de façon que la buse à gaz en forme de fente (15) s'étende le long de la direction longitudinale desdites portions dénudées,
ledit brûleur à gaz en forme de fente (15) situé à une portion centrale du brûleur à gaz de forme allongée, étant plus espacé desdites portions dénudées (1a, 2a) que ne l'est la buse à gaz en forme de fente (15) située aux portions d'extrémité opposées du brûleur à gaz de forme allongée.

22. Appareil comme revendiqué dans la revendication 21, dans lequel les portions d'extrémité opposées du brûleur à gaz (40, 40"') comportent une paire de faces supérieures plates (40A, 40A) et la portion centrale du brûleur à gaz comporte une face supérieure plate en retrait (40B), ladite buse à gaz en forme de fente (15) étant prévue sur ladite paire de faces supérieures plates (40A, 40A) et sur ladite face supérieure en retrait (40B).

23. Appareil comme revendiqué dans la revendication 21, dans lequel la portion centrale du brûleur à gaz (40') a une face supérieure plate (40B) et les portions d'extrémité opposées du brûleur à gaz comportent une paire de faces supérieures obliques (40C, 40C) inclinées vers le bas en direction de la face supérieure plate (40B), ladite buse à gaz en forme de fente (15) étant prévue sur lesdites faces supérieures obliques (40C, 40C) et sur ladite face supérieure plate (40B) de ladite portion centrale.

24. Appareil comme revendiqué dans la revendication 21, dans lequel le brûleur à gaz (40') a une face supérieure en arc concave, ladite buse à gaz en forme de fente (15) étant prévue sur ladite face supérieure en arc concave (40D).

25. Appareil comme revendiqué dans la revendication 22, dans lequel le brûleur à gaz (40"') a une pluralité de rangées de buses à gaz (15) telles que les rangées s'étendent parallèlement à la direction longitudinale des fibres optiques (1, 2).

26. Appareil pour mettre en oeuvre le procédé défini dans l'une quelconque des revendications 11 à 15, comportant:
des moyens pour maintenir des portions dénudées (1a, 2a) d'une pluralité de fibres optiques en verre (1, 2) parallèlement l'une à l'autre le long d'une direction longitudinale prédéterminée de façon à permettre de les lier par fusion l'une à l'autre, pour former une fibre unique, en les chauffant et pour étirer les portions dénudées, liées par fusion, le long de ladite direction longitudinale au cours de la poursuite de leur chauffage; et
un brûleur à gaz de forme allongée (50, 50', 50", 50"') fixe en position au voisinage desdites portions dénudées (1a, 2a) pour les chauffer,
caractérisé par le fait que
ledit brûleur à gaz de forme allongée (50, 50', 50", 50"') inclut une paire de premières buses à gaz en forme de fente (25a) disposées aux portions d'extrémité opposées du brûleur à gaz de forme allongée et une seconde buse à gaz en forme de fente disposée à une portion centrale du brûleur à gaz, ledit brûleur à gaz de forme allongée étant fixe en position de façon que lesdites premières et ladite seconde buses à gaz en forme de fente s'étendent le long de la direction longitudinale desdites portions dénudées, ladite seconde buse à gaz en forme de fente (15b) étant plus éloignée desdites portions dénudées (1a, 2a) que ne le sont les premières buses à gaz en forme de fente (15a, 15a).

27. Appareil comme revendiqué dans la revendication 26, dans lequel les portions d'extrémité opposées du brûleur à gaz (50, 50', 50", 50"') comportent une paire de faces supérieures plates (50A, 50A), et la portion centrale du brûleur à gaz comporte une face supérieure plate en retrait (50b), lesdites premières buses à gaz en forme de fente (15a, 15a) étant prévues sur ladite paire de faces supérieures plates (50A) et 50A) et ladite seconde buse à gaz en forme de fente (15b) étant prévue sur ladite face supérieure plate en retrait (50B).

28. Appareil comme revendiqué dans la revendication 26, dans lequel la portion centrale du brûleur à gaz (50') a une face supérieure plate (50B) et les portions d'extrémité opposées du brûleur à gaz comportent une paire de faces supérieures obliques (50C, 50C) inclinées vers le bas en direction de ladite face supérieure plate (50B), lesdites premières buses à gaz en forme de fente (15a, 15a) étant prévues sur lesdites faces supérieures obliques (50C, 50C) et ladite seconde buse à gaz en forme de fente (15b) est prévue sur ladite face supérieure plate (50B).

29. Appareil comme revendiqué dans la revendication 26, dans lequel le brûleur à gaz (50") a une face supérieure en arc concave (50D) telle que les premières buses à gaz en forme de fente (15a) et la seconde buse à gaz en forme (15b) sont prévues sur la face supérieure en arc concave.

30. Appareil comme revendiqué dans la revendication 27, dans lequel le brûleur à gaz (50"') a une pluralité de rangées des premières buses à gaz en forme de fente (15a) et de la seconde buse à gaz en forme de fente (15b) telles que lesdites rangées s'étendent parallèlement à la direction longitudinale des fibres optiques (1, 2).
